# EUROPEAN PATENT APPLICATION

(11) **EP 1 398 720 A2**
(43) Date of publication of application: **17.03.2004**
(21) Application number: 03019523.4
(22) Date of filing: 29.08.2003
(51) Int. Cl.: G06F 17/60

(54) **Suspended service recovery system, method and computer program product**

(30) Priority: 30.08.2002 JP 2002254713
(71) Applicant: NTT DoCoMo, Inc., Tokyo 100-6150 (JP)
(72) Inventor: Kawasaki, Norihiro, NTT DoCoMo, Inc., Chiyoda-ku Tokyo (JP); Kasai, Hiroyuki, NTT DoCoMo, Inc., Chiyoda-ku Tokyo (JP); Kikuta, Yoko, NTT DoCoMo, Inc., Chiyoda-ku Tokyo (JP); Yamazaki, Kenichi, NTT DoCoMo, Inc., Chiyoda-ku Tokyo (JP)
(74) Representative: HOFFMANN - EITLE

(57) **Abstract**

The suspended service recovery system is configured with a suspend-state analyzing module 14 to analyze a suspend-state and to extract required data to recover the suspend-state if a service being provided via a communication network 4 is suspended, a suspend-state representation module 12 to convert a result of the analysis to state-description data D2 according to a prescribed format, a storing device 3 to store the state-description data D2, a memory device 21 to memorize a recovery table which correlates each item of the state-description data D2 with a data type that can be processed on a client terminal 2, a state-description transforming module 24 to transform the state-description data D2 retrieved from the storing device 3 based on the recovery table, and a recovery-state generating module 25 to recover the suspended service.

## Description

### CROSS REFERENCE TO RELATED APPLICATIONS

This application is based upon and claims the benefit of priority from the prior Japanese Patent Applications No. P2002-254713, filed on August 30, 2002; the entire contents of which are incorporated herein by reference.

### BACKGROUND OF THE INVENTION

### 1. Field of the Invention

The present invention relates to a suspended service recovery system, a suspended service recovery method, a terminal, a suspended service recovery apparatus and a computer program product for receiving a service non-continuously from a service-providing apparatus using a first terminal and a second terminal.

### 2. Description of the Related Art

In recent years, it has become possible for services to be received, for example, via a communication network in the various environments. The environment for receiving the services may vary if a user moves to a different environment or changes to a different type of terminal, and therefore forwarding and conversion of the state of the service being received may be required.

In the conventional art, a method which recovers a suspended service in the same environment (e.g., a suspended PC), has been realized. However, recovering a suspended service in an environment, which differs from the environment in which the service suspended due to a move or a change is not feasible.

Further, although a system for service mobility which exchanges a suspend-state of a service between different environments has been proposed in the conventional art, its usage is limited because representation of the suspend-state is dependent on a service providing side. Thus, taking over of, and continuation from the suspend-state in a different environment may not be feasible, depending on the environment after a move or a change.

### BRIEF SUMMARY OF THE INVENTION

The present invention has been made in view of the above perspectives, and thus has an object of providing a suspended service recovery system, a suspended service recovery method, a terminal, a suspended service recovery apparatus and a computer program product, which enables a suspended service to be recovered in a different environment even if the service is continued in the different environment via a communication network.

In order to achieve the above object, in the case of receiving a service non-continuously via a network from a service-providing apparatus deployed on the network using a first terminal and a second terminal, the present invention analyzes a suspend-state if the service being provided to the first terminal via the network is suspended, and extracts required data in order to recover the suspend-state, converts the extracted required data to state-description data according to a prescribed format, stores the state-description data, transforms the retrieved state-description data to recovery-state data based on a recovery table which correlates each item of the state-description data with a data type that can be processed in the second terminal, and recovers the suspended service in the second terminal based on the recovery-state data.

According to the present invention, continuing the reception of service using a different terminal can be achieved by describing the state of a suspended service at the first terminal in a certain environment using the state-description data and transmitting the state-description data to the second terminal via the network. In this case, if the state-description data is described according to a prescribed format, the required data for continuing the reception of service can be exchanged regardless of the communication protocol or operating system. Thus, taking over of, and continuation from the suspend-state in a different environment become possible.

In the above invention, it is preferred that the state-description data is described in a text format using characters or symbols. In this case, if the state-description data is described according to a text format that is human-readable, the content of the state-description data can easily be understood, and coverage of the present invention can be expanded.

In the above invention, it is preferred that hardware or software resource executable in the terminal are determined based on the recovery table. In this case, since the appropriate resource is properly selected depending on the environment where the recovery state is generated, continuation of the suspended service in the different environment can be automated.

In the above invention, it is preferred that if the first terminal receives the service using a plurality of resources configured by hardware or software, the required data is separately extracted for the respective resources. In this case, since a service containing a plurality of media, e.g., video, audio and text, is separately processed, only the appropriate medium can be taken over based on the ability of the terminal that continues the suspended service.

In the above invention, it is preferred that the plurality of the state-description data is merged and the merged state-description data is transformed to the recovery-state data, and that the service is recovered simultaneously using a plurality of resources configured by hardware or software. In this case, services, which were being received under different environments respectively, can be recovered simultaneously in a new environment.

### BRIEF DESCRIPTION OF THE SEVERAL VIEWS OF THE DRAWINGS

Fig. 1 is a block diagram showing a suspended service recovery system according to the embodiment;
Fig. 2 is a diagram describing a process of recovering a suspended service using the suspended service recovery system according to the embodiment;
Fig. 3 is a diagram describing a process of analyzing a suspend-state according to the embodiment;
Fig. 4 is a diagram describing a process of converting the suspend-state according to the embodiment;
Fig. 5 is a diagram describing a process of representing the suspend-state according to the embodiment;
Fig. 6 is a diagram describing a process of analyzing the description of the suspend-state according to the embodiment;
Fig. 7 is a diagram describing a process of determining resources to be used according to the embodiment;
Fig. 8 is a diagram describing a process of transforming the suspend-state according to the embodiment;
Fig. 9 is a diagram describing a process of generating a recovery state according to the embodiment;
Fig. 10 is a diagram describing a process of reproducing the suspend-state according to the embodiment;
Fig. 11 is a diagram describing a process of merging the suspend-state according to the embodiment;
Fig. 12 is a diagram describing a process of separating the suspend-state according to the embodiment;
Fig. 13 a block diagram showing a suspended service recovery system according to a modification example of the embodiment; and
Fig. 14 is a diagram showing a computer-readable recording medium in which the suspended service recovery program according to the embodiment is recorded.

### DETAILED DESCRIPTION OF THE INVENTION

### Configuration of Suspended Service Recovery System

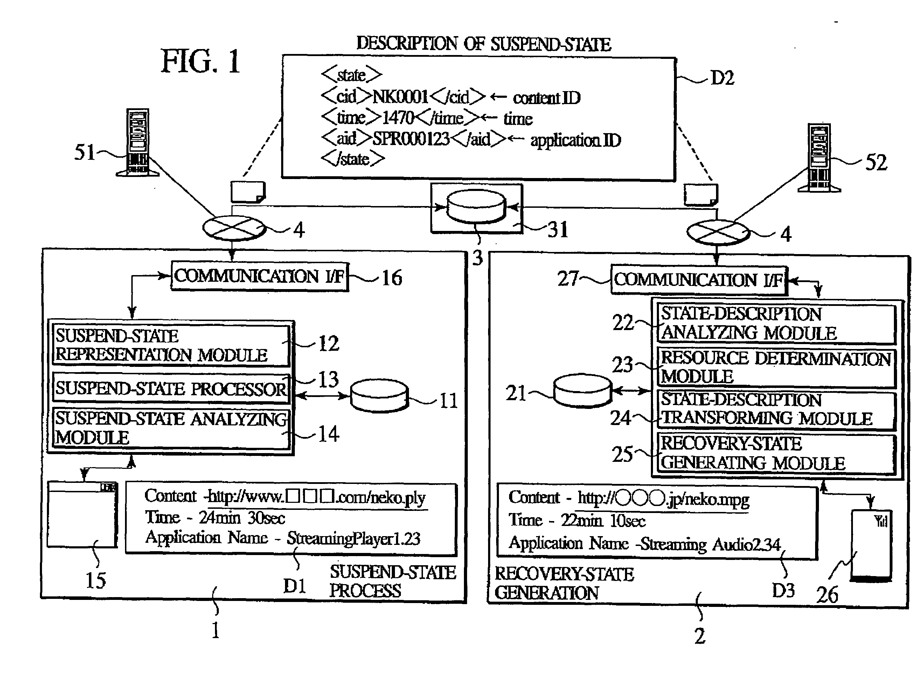

An embodiment of a suspended service recovery system according to the invention will be described with reference to associated drawings. Fig. 1 schematically diagrams the configuration of the suspended service recovery system according to the embodiment of the invention.

As shown in Fig. 1, the suspended service recovery system is configured for receiving a service at a client terminal 1 (the first terminal) and a client terminal 2 (the second terminal) from service-providing apparatuses 51 and 52 deployed on a communication network 4.

The service-providing apparatuses 51 and 52 are configured by a server computer, which delivers contents containing web pages, visual and audio data for providing the service. In the embodiment, the service-providing apparatus 51 delivers data, which can be viewed using browsing software running on a PC for example, and the service-providing apparatus 52 delivers data, which can be viewed on a mobile phone terminal, etc.

In the embodiment, a suspended service recovery apparatus 31 has a storing device 3, which stores a state-description data D2 transmitted by the client terminal 1. The state-description data D2 stored in the storing device 3 is transmitted to the client terminal 2 according to a request by the client terminal 2. It is to be noted that in the embodiment, the storing device 3 configures the storing unit, and suspended service recovery apparatus 31 configures the state-description data retriever and the state-description data transmitter.

The client terminal 1 is configured by either a desktop or laptop-type PC, or a mobile terminal such as a mobile phone terminal or a personal digital assistant (PDA) for example. In this embodiment, the client terminal 1 is configured with a communication I/F 16 (the transmitter), a suspend-state representation module 12, a suspend-state processor 13, a suspend-state analyzing module 14 (the analyzer), a service execution module 15 and a memory device 11.

The communication I/F 16 connects the client terminal 1 to the communication network 4 and transmits/receives data, and can be, for example, a modem, a terminal adapter or a LAN (e.g., 100BASB-TX) card.

The suspend-state analyzing module 14 is a module to analyze a suspend-state if a service being provided via the communication network 4 is suspended, and to extract suspend-state data D1 that is required to recover the suspended service. Further, in the embodiment, the suspend-state analyzing module 14 has a function to separate the service to each resource basis if the client terminal 1 receives the service using a plurality of hardware and/or software resources.

The suspend-state processor 13 is a module to convert the result of the extraction performed by the suspend-state analyzing module 14 in order to use the data in a different environment and to forward the data to the suspend-state representation module 12. The suspend-state representation module 12 is a module to represent the data converted by the suspend-state processor 13 as the state-description data D2, which is described according to a prescribed format. It is to be noted that in the embodiment, the suspend-state representation module 12 and the suspend-state processor 13 configure the representation unit.

The service execution module 15 is software for playing visual or audio contents delivered by the service-providing apparatus 51, e.g., browsing software or media-playing software running on a computer.

The memory device 11 is, for example, a hard disk drive (HDD) or a memory device either equipped in the client terminal 1 or connected to the client terminal 1. In the embodiment, the memory device 11 memorizes the required data to convert the suspend-state data D1 to the state-description data D2.

The client terminal 2 is configured by either a desktop or laptop-type PC, or a mobile terminal such as a mobile phone terminal or a PDA for example. In the embodiment, the client terminal 2 is configured with a communication I/F 27, a state-description analyzing module 22 (the retriever), a resource determination module 23 (the resource determination unit), a state-description transforming module 24 (the state-description transformer), a recovery-state generating module 25, a service execution module 26 and a memory device 21 (the memory unit).

The communication I/F 27 connects the client terminal 2 to the communication network 4 and transmits/receives data, and can be, for example, a modem or a terminal adapter.

The memory device 21 memorizes a recovery table, which correlates each item of the state-description data D2 with a data type that can be processed in the client terminal 2. The memory device 21 is configured by a hard disk drive (HDD), or a memory device either equipped in the client terminal 2 or connected to the client terminal 2.

In the recovery table according to the embodiment, data required for describing the suspend-state, determination of resources to be used and the analysis as well as the transformation of the state-description data D2 are described separately.

The resource determination module 23 is a module for selecting appropriate hardware and software resources in the client terminal 2 based on recovery-state data D3.

The state-description analyzing module 22 is a module for retrieving the state-description data D2 from the storing device 3 via the communication network 4 and for analyzing the content of the state-description data D2. The state-description analyzing module 22 then forwards the result of the analysis to the resource determination module 23.

The state-description transforming module 24 is a module for transforming the state-description data D2 based on the recovery table. Further, the state-description transforming module 24 according to the embodiment has a function to merge the plurality of the state-description data D2, and the recovery-state generating module 25 recovers services simultaneously, based on the merged state-description data D2 using a plurality of resources.

The recovery-state generating module 25 is a module to recover the suspended service based on the recovery-state data D3, and the recovered service continues from the suspend-state via the service execution module 26.

The service execution module 26 is software for playing visual or audio contents delivered by the service-providing apparatus 52 according to the data forwarded by the recovery-state generating module 25, e.g., browsing software and media-playing software running on a computer. It is to be noted that in the embodiment, the recovery-state generating module 25 and the service execution module 26 configure the service-recovering unit.

### Suspended Service Recovery Method using Suspended Service Recovery System

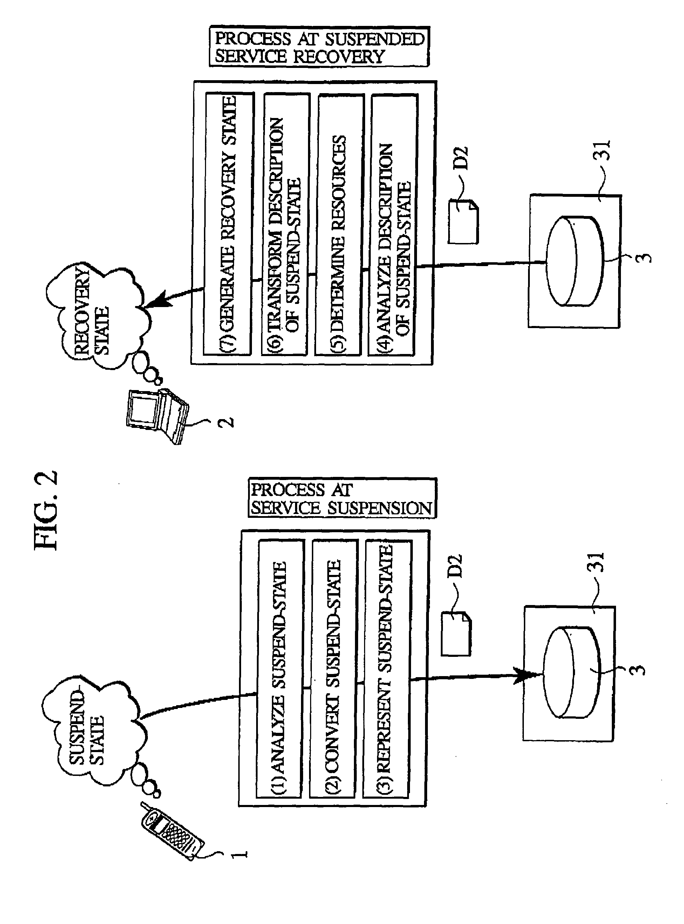

Hereinafter, a suspended service recovery method using the suspended service recovery system will be described. Fig. 2 schematically diagrams a process of the suspended service recovery method according to the embodiment. Here, a typical example will be described, exemplified by a case where a streaming service being received from the service-providing apparatus 51 is suspended at the client terminal 1 and the client terminal 2 then continues the suspended service using a service provided by the service-providing apparatus 52.

### (1) Process at Service Suspension

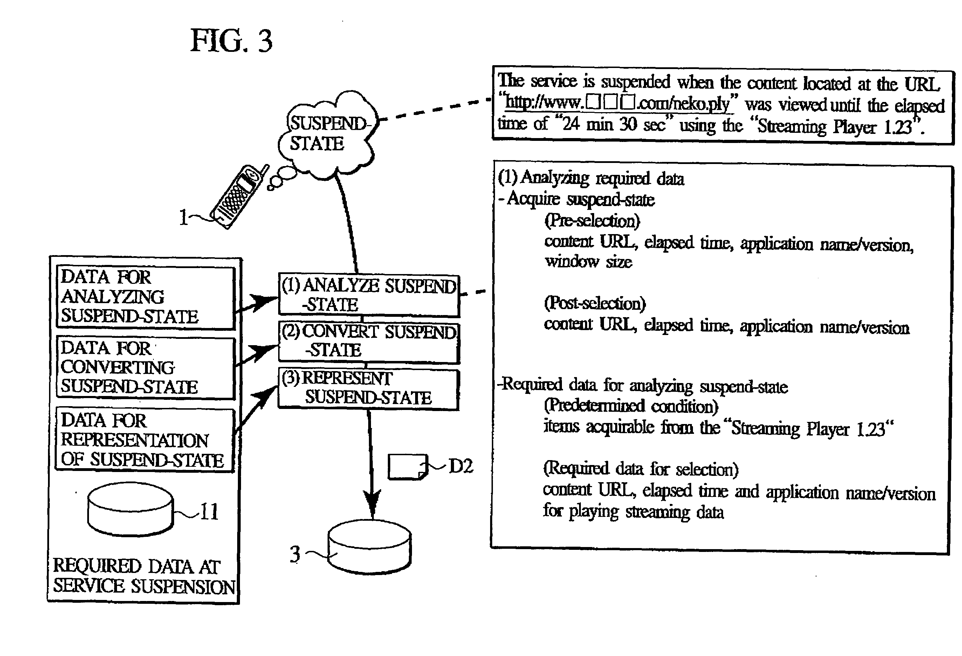

In the event that a service is suspended in the client terminal 1, firstly, the suspend-state analyzing module 14 analyzes a suspend-state in the service execution module 15 (notation (1) in Fig. 2). Here, as shown in Fig. 3, it is assumed that the service is suspended when the content located at the URL "http://www. □□□.com/neko.ply" is viewed until the elapsed time of "24 min 30 sec" using the "Streaming Player 1.23" at the client terminal 1.

As shown in Fig. 3, the suspend-state analyzing module 14 acquires the data from the Streaming Player 1.23 executed by the service execution module 15 using an application program interface (API) when the service is suspended.

For example, if the URL of the content, the elapsed time, and the name, version and window size of the application are acquired via the API, the required data is selected from the acquired data. In this case, the URL of the content, the elapsed time, and the name and version of the application are selected, whereas the window size is not selected because it is not required for recovery of the service.

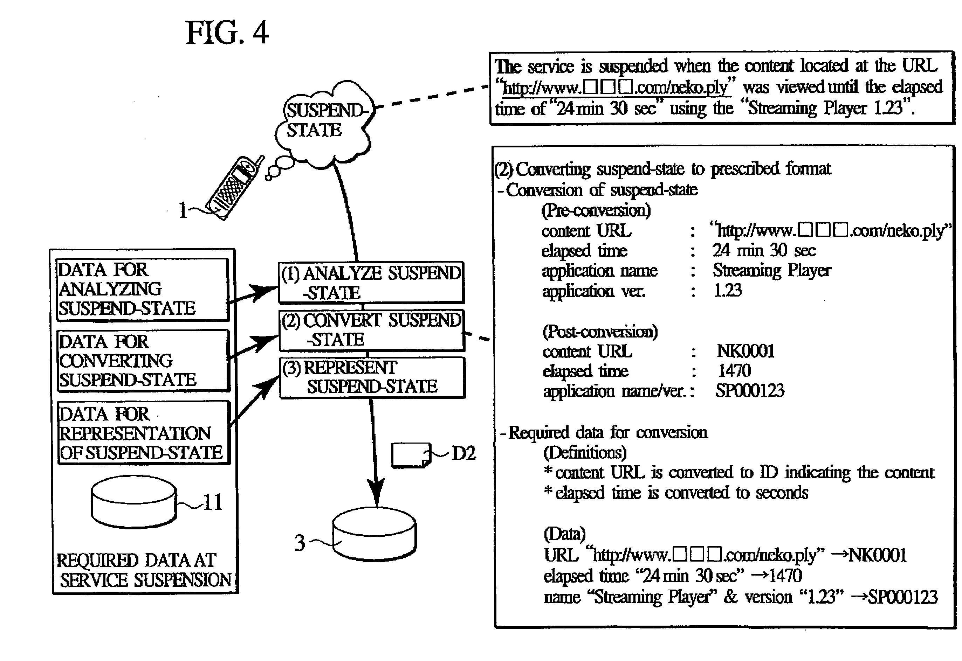

The suspend-state processor 13 then converts the suspend-state data D1, which is selected by the suspend-state analyzing module 14 in order to use the data in a different environment (notation (2) in Fig. 2). Specifically, as shown in Fig. 4, the suspend-state data D1 is converted to a prescribed format, which can be used in the different environment. For example, the URL "http://www. □□□.com/neko.ply" is converted to the content ID "NK0001", which indicates the content. Further, the elapsed time "24 min 30 sec" is converted to "1470" seconds and the name "Streaming Player 1.23" is converted to the application ID "SP000123", respectively.

After the conversion, the suspend-state representation module 12 represents the data converted by the suspend-state processor 13 as the state-description data D2 in order to use the data in the different environment (notation (3) in Fig. 2).

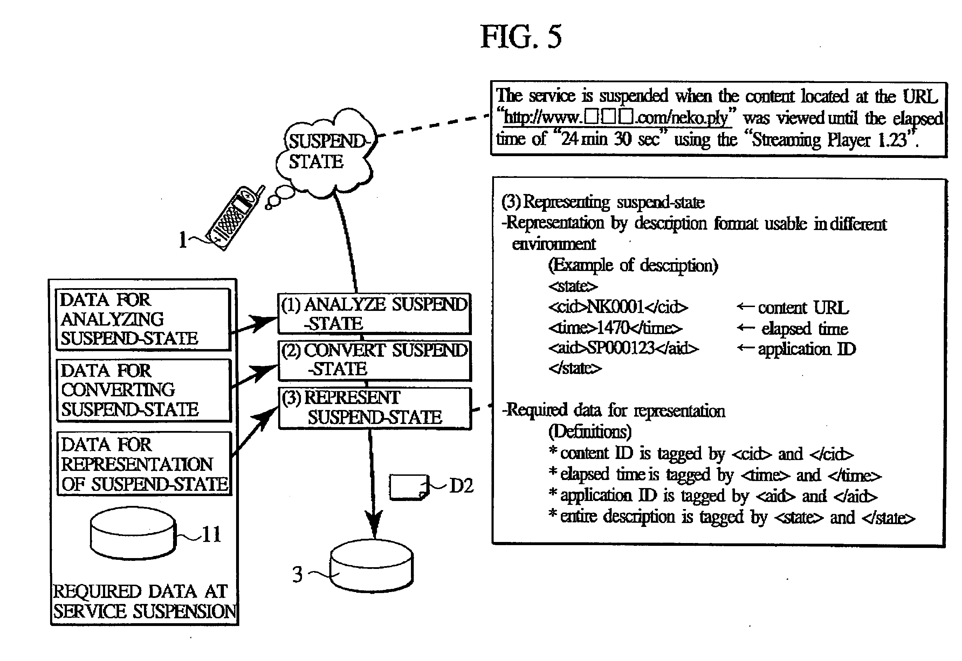

In the embodiment, the state-description data D2 is described by characters and symbols, which are human-readable. For example, a markup language that defines an attribute of a character string using a tag, e.g., HTML and XML, is utilized. In the embodiment, as shown in Fig. 5, the content ID is defined by <cid> and </cid>. Similarly, the elapsed time is defined by <time> and </time>, the application ID is defined by <aid> and </aid>, and the entirety of data is defined by <state> and </state>.

The state-description data D2 is then transmitted from the communication I/F 16 to the suspended service recovery apparatus 31 via the communication network 4, and the state-description data D2 is stored in the storing device 3 of the suspended service recovery apparatus 31.

### (2) Process of Suspended Service Recovery

In order to recover the suspended service at the client terminal 2, the client terminal 2 first retrieves the state-description data D2 from the suspended service recovery apparatus 31, and the state-description analyzing module 22 analyzes the suspend-state of the client terminal 1 based on the state-description data D2 (notation (4) in Fig. 2).

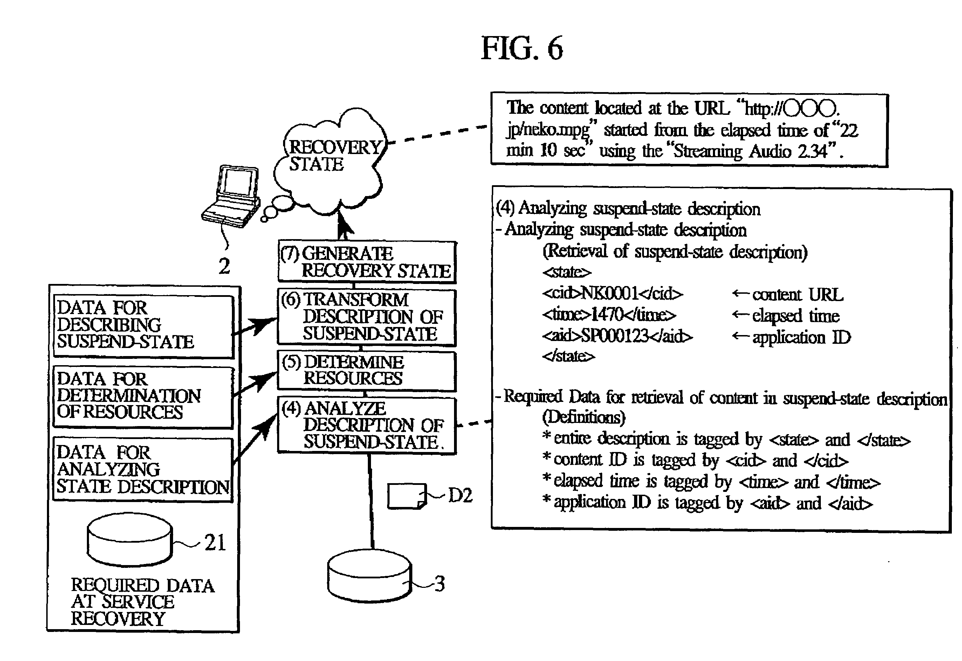

Specifically, as shown in Fig. 6, the state-description data D2 is analyzed according to the definitions (e.g., the content ID is tagged with <cid> and </cid>) so as to extract the contained data. Here, it is assumed that the content ID "NK0001", the elapsed time "1470" and the application ID "SP000123" have been acquired.

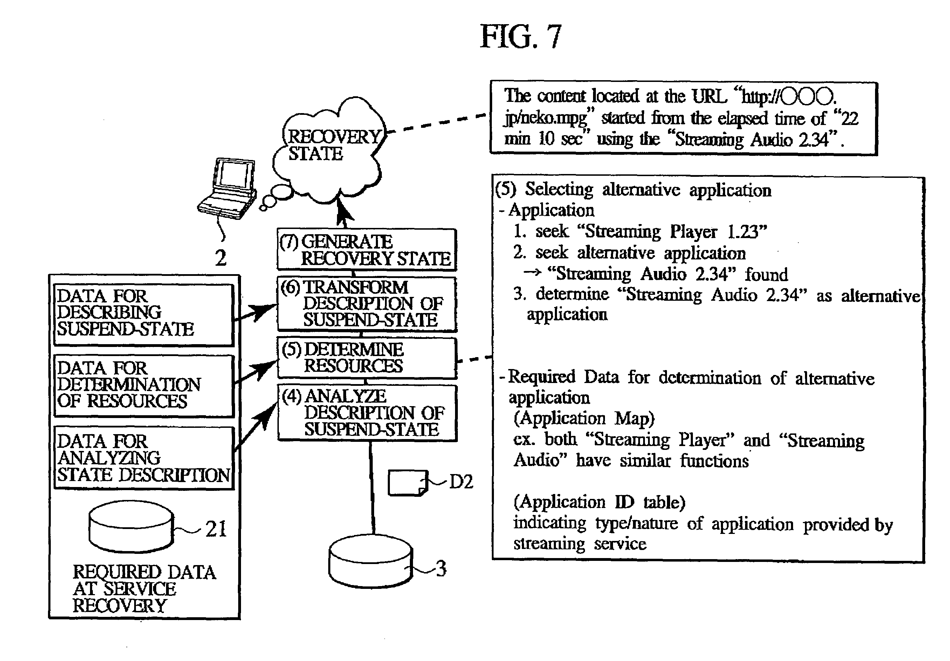

Based on the result of the analysis by the state-description analyzing module 22, the resource determination module 23 determines available resources in the client terminal 2 (notation (5) in Fig. 2). Specifically, as shown in Fig. 7, the resource determination module 23 refers to the recovery table memorized in the memory device 21 so as to select an alternative application that is able to play a streaming data. Here, it is assumed that the "Streaming Audio" can be utilized in lieu of the "Streaming Player" as an application having the ability to play the streaming data according to the "application map" in the recovery table, which indicates that both the "Streaming Player" and the "Streaming Audio" have similar functions. Therefore, the "Streaming Audio" is selected as an alternative application to the "Streaming Player" at the client terminal 2.

The state-description transforming module 24 then transforms the data analyzed by the state-description analyzing module 22 to the data, which can be utilized by the selected application in the client terminal 2 (notation (6) in Fig. 2).

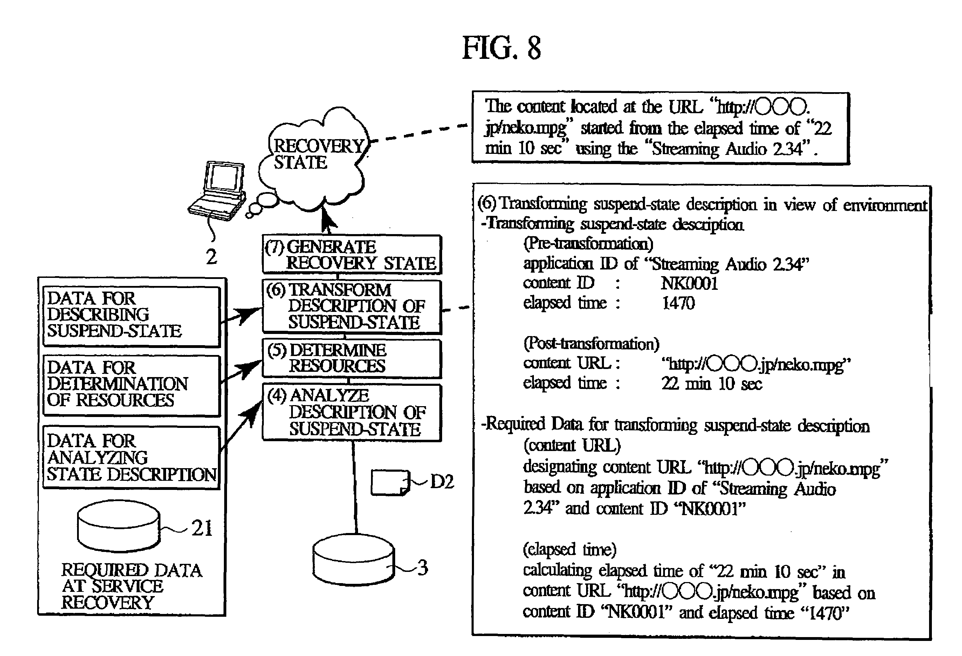

Specifically, as shown in Fig. 8, as regards a URL, "http://○○○.jp/neko.mpg" is obtained as the result of transformation based on the application "Streaming Audio 2.34" and the content ID "NK0001". As for an elapsed time, it is assumed that the recovery table contains the "application ID table", which indicates the type of application provided by a streaming service. Therefore, it can be determined that the corresponding elapsed time for the "http.// ○○○.jp/neko.mpg" is "22 min 10 sec" based on the content ID "NK0001" and the elapsed time "1470".

Subsequently, the recovery-state generating module 25 generates a recovery state of the service in order for the service execution module 26 to execute the service using the data transformed by the state-description transforming module 24 (notation (7) in Fig. 2). Here, the recovery state, which makes the client terminal 2 play the "http:// OOO.jp/neko.mpg" starting from the elapsed time " 22 min 10 sec" using the "Streaming Audio", is generated.

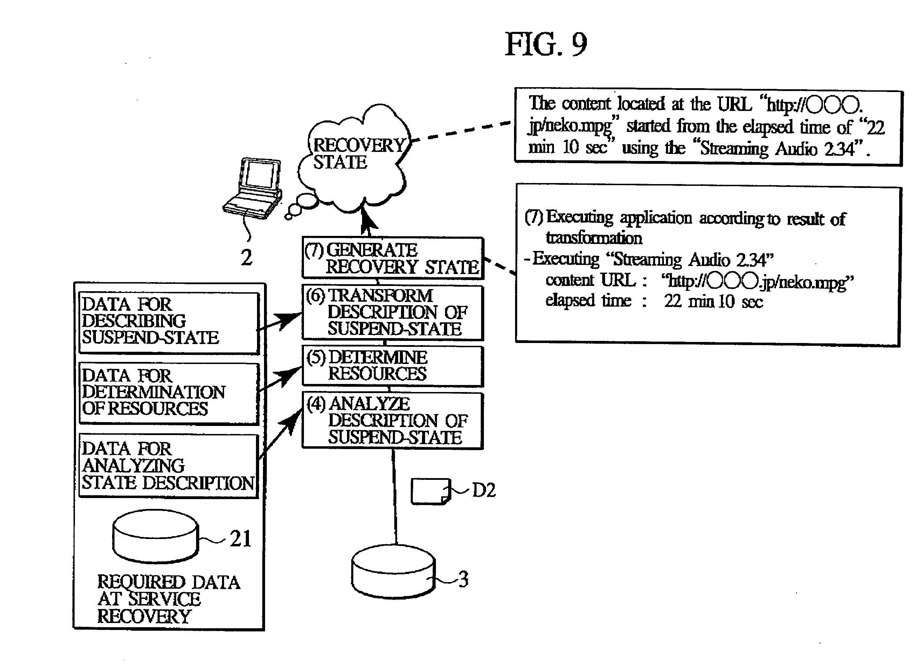

Specifically, as shown in Fig. 9, the "Streaming Audio 2.34" is executed in the client terminal 2 in order to play the "http:// ○○○.jp/neko.mpg" starting from the elapsed time " 22 min 10 sec".

### (3) Process of the State-Description Data Reproduction

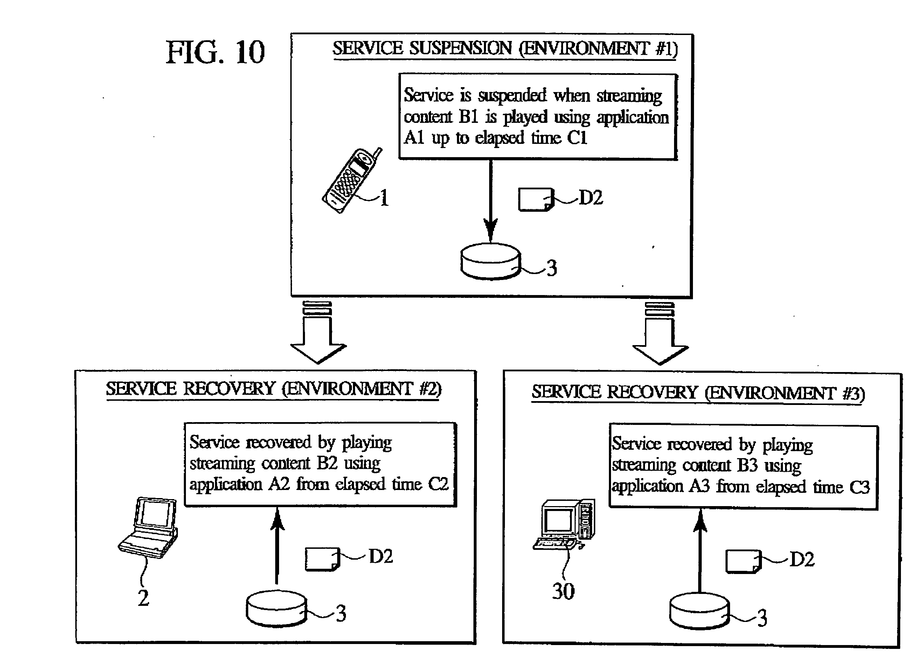

In a case where the service received at the client terminal 1 is continued in different plural environments (at the client terminal 2 and a client terminal 30), the state-description data D2 transmitted by the client terminal 1 is reproduced and the other client terminals retrieve the state-description data D2 in order to continue the service starting from the suspend-state. Fig. 10 schematically diagrams reproduction of the state-description data D2.

Here, it is assumed that the client terminal 1 played the streaming content B1 using the application A1 up to the elapsed time C1 **.** The state-description data D2, which describes about this suspend-state, is generated in the client terminal 1 and the state-description data D2 is transmitted to the suspended service recovery apparatus 31 so as to store the state-description data D2 in the storing device 3.

The suspended service recovery apparatus 31 reproduces the state-description data D2 in order for the client terminal 2 and the client terminal 30 to retrieve the state-description data D2, respectively. The client terminal 2 and the client terminal 30 then perform the processes (4) to (7) in Fig. 2 described above. As a result, the client terminal 2 generates a recovery state, which plays the streaming content B2 starting from the elapsed time C2 using the application A2. On the other hand, the client terminal 30 generates a recovery state, which plays the streaming content B3 starting from the elapsed time C3 using the application A3.

### (4) Process of Merging

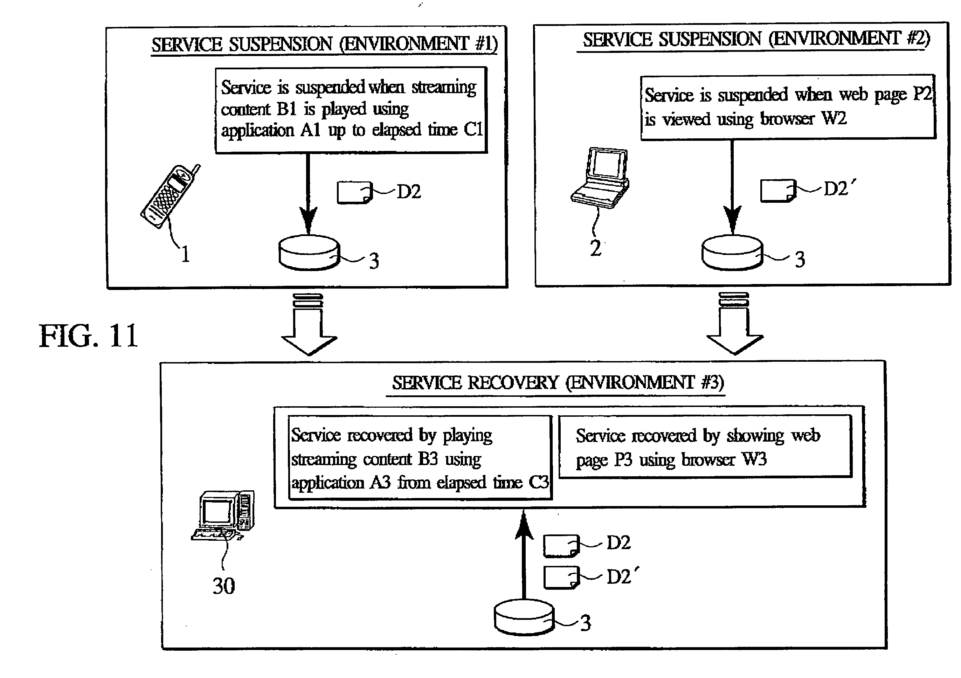

In addition to the reproduction, it is also feasible that the services received in different plural environments (at the client terminal 1 and client terminal 2) are merged into a single environment (at the client terminal 30) in order to continue the services. Fig. 11 schematically diagrams merging of the suspend-states.

Here, it is assumed that the client terminal 1 played the streaming content B1 using the application A1 up to the elapsed time C1 and the web page P2 was viewed using the browser W2 at the client terminal 2. The client terminals respectively generate the state-description data D2 and the state-description data D2', and transmit them to the suspended service recovery apparatus 31 so as to store the state-description data D2 and the state-description data D2' in the storing device 3.

Subsequently, the client terminal 30 retrieves both the state-description data D2 and the state-description data D2'. The client terminal 30 then merges the data to generate the recovery states, which make the client terminal 30 play the streaming content B3 starting from the elapsed time C3 using the application A3, and which shows the web page P3 using the browser W3.

### (5) Process of Separation

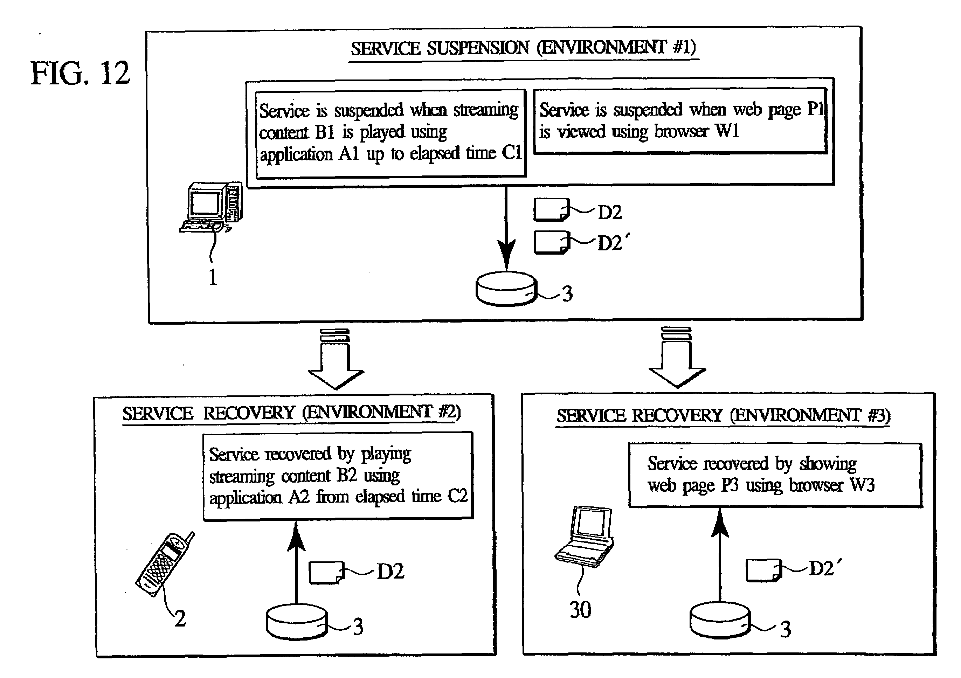

Moreover, it is also feasible that the service is separately continued in different environments (at the client terminal 2 and the client terminal 30) if the service is received using a plurality of resources configured by hardware and/or software, etc in a certain environment (at the client terminal 1). Fig. 12 schematically diagrams separation of the suspend-state.

Here, it is assumed that the client terminal 1 played the streaming content B1 using the application A1 up to the elapsed time C1 and at the same time, the web page P1 was viewed using the browser W1 at the client terminal 1. The client terminal 1 generates the state-description data D2 and the state-description data D2', which describe both suspend-states, respectively. The client terminal 1 then transmits the data to the suspended service recovery apparatus 31 so as to store the state-description data D2 as well as the state-description data D2' in the storing device 3.

The client terminal 2 then retrieves the state-description data D2 in order to generate the recovery state, which makes the client terminal 2 play the streaming content B2 starting from the elapsed time C2 using the application A2. On the other hand, the client terminal 30 retrieves the state-description data D2' in order to generate the recovery state, which makes the client terminal 30 show the web page P3 using the browser W3.

### Modification

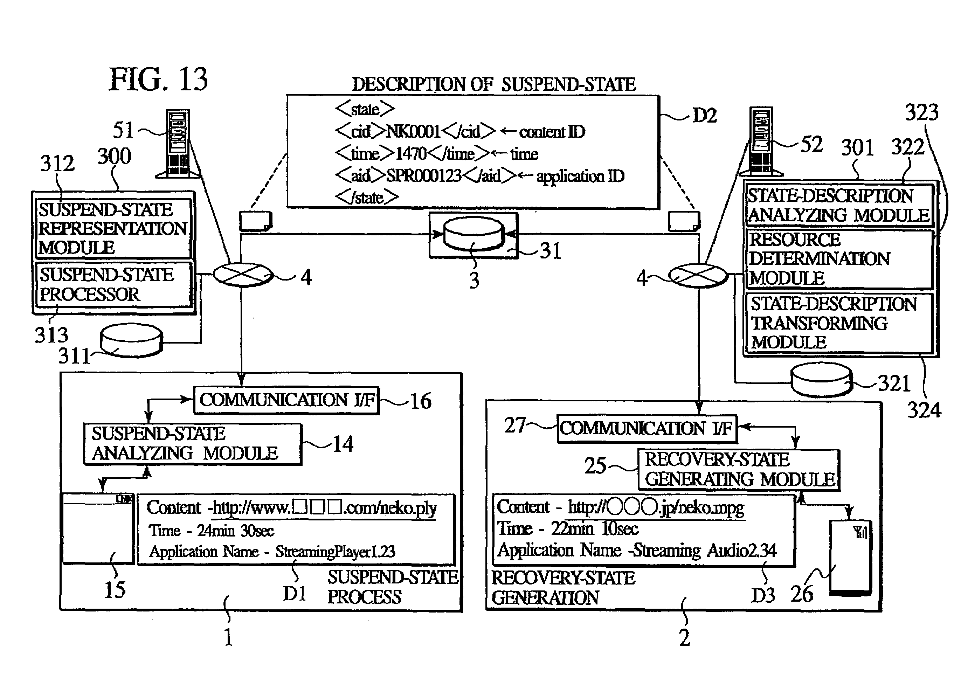

The present invention is not restricted to the above described embodiment, and the following modification can be accomplished. Fig. 13 is a block diagram showing a suspended service recovery system according to the modification.

As shown in Fig. 13, it is feasible that the suspend-state representation module 12, the suspend-state processor 13, the memory device 11, the state-description analyzing module 22, the resource determination module 23, the state-description transforming module 24 and the memory device 21, which are described in the above embodiment, are deployed on the communication network 4 in lieu of client terminals.

Specifically, the suspend-state representation module 12, the suspend-state processor 13, the memory device 11, the state-description analyzing module 22, the resource determination module 23, the state-description transforming module 24 and the memory device 21 are omitted from the client terminal 1 or the client terminal 2. Instead, these parts are located in either one of suspended service recovery apparatuses 300 or 301 deployed on the communication network 4, as a suspend-state representation module 312, a suspend-state processor 313, a memory device 311, a state-description analyzing module 322, a resource determination module 323, a state-description transforming module 324 and a memory device 321.

Incidentally, in Fig. 13, although the suspended service recovery apparatus 31, 300 and 301 are deployed individually, they may be integrated in a single server computer.

In the modification, the suspend-state analyzing module 14 of the client terminal 1 analyzes the suspend-state using the data memorized in the memory device 311 via the communication network 4 and transmits the analyzed result as the suspend-state data D1 to the suspended service recovery apparatus 300. The suspended service recovery apparatus 300 converts the received suspend-state data D1 to the state-description data D2 and transmits the state-description data D2 to the suspended service recovery apparatus 31 so as to store the state-description data D2 in the storing device 3.

In a case where the service is recovered at the client terminal 2, the suspended service recovery apparatus 301 retrieves the state-description data D2 from the suspended service recovery apparatus 31 based on a request by the client terminal 2. The suspended service recovery apparatus 301 then analyzes and transforms the state-description data D2 in order to generate the recovery-state data D3. Further, the suspended service recovery apparatus 301 transmits the recovery-state data D3 to the client terminal 2. The client terminal 2 recovers the suspended service according to the recovery-state data D3.

It is to be noted that in the embodiment and the modification described above, as shown in Fig. 1 and 13, although modules which are required for the suspended service are installed in the client terminal 1, and modules which are required for the service recovery are installed in the client terminal 2, the present invention is not restricted to such a configuration and all the modules may be installed in the same client terminal.

### Suspended Service Recovery Program and Computer-Readable Recording Medium Storing the Program

The above described suspended service recovery system as well as the suspended service recovery method according to the embodiment and the modification can be represented by a program, which is described by a prescribed computer language. This means that the above described client terminals 1, 2 and 30 can be easily realized by installation of the program into a computer or a communication terminal, e.g., a mobile phone terminal. Further, the program or a service using the program may be provided by application service providers (ASP) via a network,

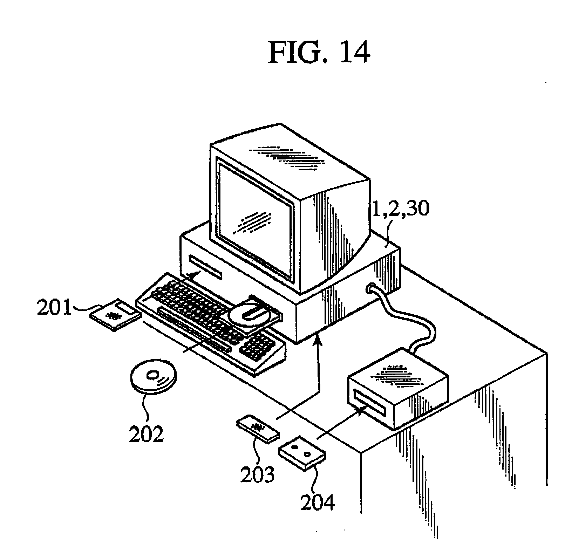

The program can be recorded in recording media 201 through 204, whose contents are readable by a personal computer, etc., i.e., the client terminals 1, 2 and 30 as shown in Fig. 14. Specifically, as shown in Fig. 14, the program may be recorded to a various recording media, i.e., a flexible disk 201, CD-ROM/DVD-ROM 202, RAM card 203 or a cassette tape 204. Further, the program may be recorded to a hard-disk drive (HDD) in the client terminals 1, 2 and 30.

According to the recording medium to which the program is recorded, the suspended service recovery system and the suspended service recovery method are realized using a personal computer or a mobile phone terminal, etc. and the storing, carrying and installation of the program are facilitated,

As will be seen from the foregoing description, according to the suspended service recovery system, the suspended service recovery method, the terminal, the suspended service recovery apparatus and the computer program product, which enable that a suspended service is recovered in a different environment, even if the service is continued in the different environment via a communication network.

The invention has been described in detail by referring to the embodiments. It is obvious to those skilled in the art that the invention is not restricted to the embodiments described above. The invention may be carried out as a corrected or modified embodiment not departing from the gist and scope specified by the scope of the claims of a patent. Therefore, the description of this specification aims at the representation of examples but does not have any limitation on the present invention.

## Claims

1. A suspended service recovery system for receiving a service non-continuously via a network from a service-providing apparatus deployed on the network, comprising:
a first terminal and a second terminal, both of which receive the service from the service-providing apparatus;
an analyzer configured to analyze a suspend-state if the service being provided to the first terminal via the network is suspended, and to extract required data in order to recover the suspend-state;
a representation unit configured to convert the required data extracted by the analyzer to state-description data according to a prescribed format;
a storing unit configured to store the state-description data;
a memory unit configured to memorize a recovery table which correlates each item of the state-description data with a data type that can be processed on the second terminal;
a state-description transformer configured to transform the state-description data retrieved from the storing unit to recovery-state data based on the recovery table; and
a service-recovering unit configured to recover the suspended service on the second terminal based on the recovery-state data.

2. A suspended service recovery method for receiving a service non-continuously via a network from a service-providing apparatus deployed on the network using a first terminal and a second terminal, comprising the steps of:
(1) analyzing a suspend-state if the service being provided to the first terminal via the network is suspended, and extracting required data in order to recover the suspend-state;
(2) converting the required data extracted at a step (1) to state-description data according to a prescribed format;
(3) storing the state-description data;
(4) transforming the retrieved state-description data to recovery-state data based on a recovery table which correlates each item of the state-description data with a data type that can be processed on the second terminal; and
(5) recovering the suspended service on the second terminal based on the recovery-state data.

3. A terminal for receiving a service non-continuously via a network from a service-providing apparatus deployed on the network, comprising:
an analyzer configured to analyze a suspend-state if a service being provided via the network is suspended, and to extract required data in order to recover the suspend-state; and
a transmitter configured to transmit the required data to the network.

4. A terminal according to claim 3, further comprising a representation unit to convert the required data extracted by the analyzer to state-description data according to a prescribed format, and wherein the transmitter transmits the state-description data in lieu of the required data to the network.

5. A terminal for receiving a service non-continuously via a network from a service-providing apparatus deployed on the network, comprising a service-recovering unit configured to recover a suspend-state of the service which is suspended by another terminal based on required data retrieved from the network.

6. A terminal for receiving a service non-continuously via a network from a service-providing apparatus deployed on the network, comprising;
a retriever configured to retrieve state-description data in which required data to recover a suspend-state of a suspended service is converted according to a prescribed format;
a memory unit configured to memorize a recovery table which correlates each item of the state-description data with a data type that can be processed on another terminal;
a state-description transformer configured to transform the retrieved state-description data to a recovery-state data based on the recovery table; and
a service-recovering unit configured to recover the suspended service on the other terminal based on the recovery-state data.

7. A terminal according to claim 6, further comprising a resource determination unit configured to determine hardware or software resource executable in the other terminal based on the recovery table.

8. A suspended service recovery apparatus for providing a service non-continuously to a first terminal and a second terminal via a network, comprising:
a state-description data retriever configured to retrieve state-description data in which a suspend-state of a suspended service is converted according to a prescribed format;
a storing unit configured to store the retrieved state-description data; and
a state-description data transmitter configured to transmit the state-description data to the second terminal according to a request by the second terminal.

9. A suspended service recovery apparatus according to claim 8, further comprising a representation unit configured to acquire the suspend-state if the service being provided to the first terminal is suspended, and to convert required data to recover the suspend-state to the state-description data according to a prescribed format.

10. A suspended service recovery apparatus according to claim 8, further comprising:
a memory unit configured to memorize a recovery table which correlates each item of the state-description data with a data type that can be processed on the second terminal; and
a state-description transformer configured to transform the state-description data retrieved from the storing unit to recovery-state data, which is utilized to recover the suspended service, based on the recovery table.

11. A computer program product to be executed by a computer for receiving a service non-continuously via a network from a service-providing apparatus deployed on the network using a first terminal and a second terminal, comprising the steps of:
(1) analyzing a suspend-state if the service being provided to the first terminal via the network is suspended, and extracting required data in order to recover the suspend-state;
(2) converting the required data extracted at a step (1) to state-description data according to a prescribed format;
(3) storing the state-description data;
(4) transforming the retrieved state-description data to recovery-state data based on a recovery table which correlates each item of the state-description data with a data type that can be processed on the second terminal; and
(5) recovering the suspended service on the second terminal based on the recovery-state data.

12. A computer program product according to claim 11, wherein the state-description data is described in a text format using characters or symbols.

13. A computer program product according to claim 11, wherein at a step (4), hardware or software resource executable in the second terminal is selected based on the recovery table.

14. A computer program product according to claim 11, wherein at a step (1) or a step (2), if the first terminal receives the service using a plurality of resources configured by hardware or software, the required data is separated for the respective resources.

15. A computer program product according to claim 11, wherein at a step (4), the plurality of the state-description data is merged and the merged state-description data is transformed to the recovery-state data, and
At a step (5), the service is recovered simultaneously using a plurality of resources configured by hardware or software.
